# EUROPEAN PATENT SPECIFICATION

(11) **EP 3 394 494 B1**
(45) Date of publication and mention of the grant of the patent: **13.01.2021**
(21) Application number: 16813030.0
(22) Date of filing: 14.12.2016
(51) Int. Cl.: F16L 23/10, F01N 13/18

(54) **IMPROVED SLIP JOINT APPARATUS AND METHOD OF USE THEREOF**
VERBESSERTE GLEITGELENKVORRICHTUNG UND VERFAHREN ZUR VERWENDUNG DAVON
APPAREIL DE JOINT GLISSANT AMÉLIORÉ ET SON PROCÉDÉ D'UTILISATION

(30) Priority: 22.12.2015 GB 201522586
(43) Date of publication of application: 31.10.2018
(73) Proprietor: Teconnex Ltd, Keighley, Yorkshire BD21 4LG (GB)
(72) Inventor: GREEN, Richard, Keighley Yorkshire BD21 4LG (GB)
(74) Representative: Tomkinson, Alexandra
(86) International application number: PCT/GB2016/053927
(87) International publication number: WO 2017/109458

(56) References cited:
- EP-A2- 1 647 754
- FR-A1- 2 867 511
- US-A- 2 287 889
- US-A- 3 656 784
- US-A1- 2011 074 150

## Description

This invention relates to improved slip joint apparatus and to a method of using the same.

A slip joint is generally used to join two components together, and which either allows continuous relative movement of the two components or to allow adjustment of the components from one temporarily fixed position to another temporarily fixed position in use.

Although the following description refers almost exclusively to slip joint apparatus for use in joining two equal or similar diameter pipes together, such as for example the assembly of pipes forming a vehicle exhaust system to allow the flow of exhaust gases along the joined pipes, it will be appreciated by persons skilled in the art that the slip joint apparatus of the present invention could be used in any suitable application for allowing relative movement or adjustment of any two components in use.

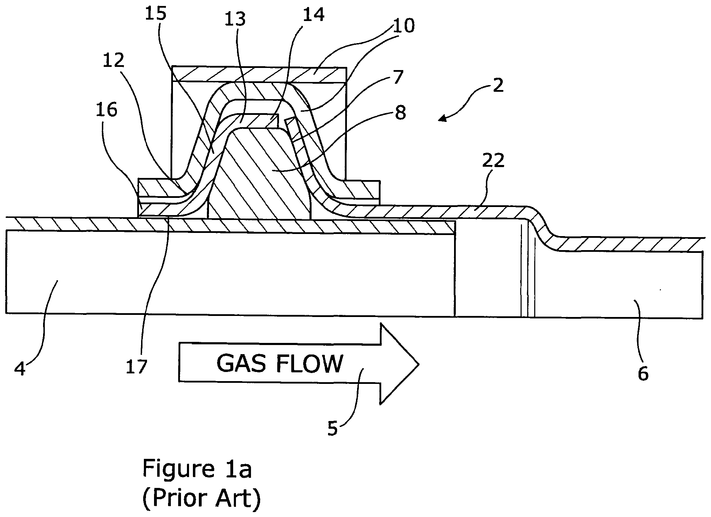

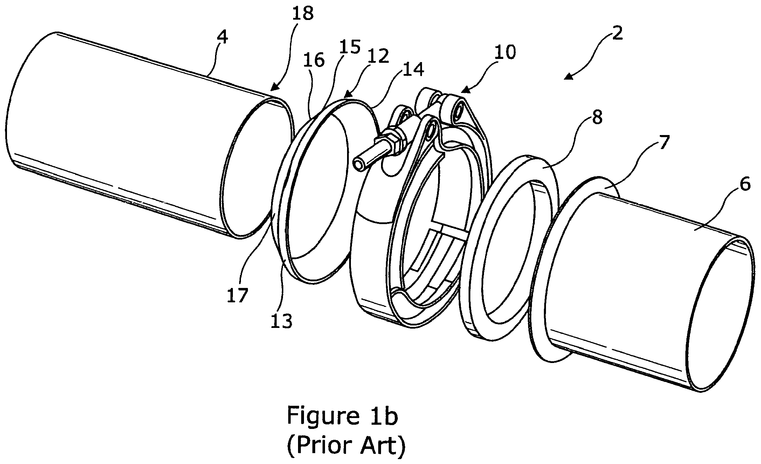

With reference to figures 1a and 1b, there is illustrated an example of a conventional slip joint assembly 2 used for the connection of two cylindrical pipes together; inlet pipe 4 and outlet pipe 6, in a vehicle exhaust system. With the pipes 4, 6 joined together, exhaust fluid flows along the joined pipe, as shown by arrow 5. Outlet pipe 6 has a flared free end 7. A slip flare 12 is provided for location over the free end of the inlet pipe 4. Slip flare 12 has a first skirt or flat platform section 13 adjacent end 14 which is outwardly flared or of larger diameter to a second skirt or flat platform section 17 adjacent second end 16. A single step or joining element 15 is located between the first and second skirt sections 13, 17 of slip flare 12. When assembled, the slip flare 12 is located over the free end 18 of inlet pipe 4, together with a sealing gasket 8. The free end 18 of inlet pipe 4 is inserted into the flared open end of outlet pipe 6, such that gasket 8 is in abutting relationship with the slip flare 12 and the flared free end 7 of the outlet pipes 6. A retaining clamp 10 is provided over the flared free end 7, the gasket 8 and slip flare 12 to retain the slip joint together in use. Use of the slip joint in this application allows a degree of tolerance between the two pipes, meaning that the length of the inlet and outlet pipes is not critical. This is of particular benefit when the pipework is being manufactured as the forming, cutting and/or assembly of individual pipes can result in deviations in the lengths of the pipes. If a standard joint is used rather than a slip joint; a standard joint being where pipe ends butt up to a flare, the deviation in pipe length would result in the pipe ends being either too far apart or too close together. This would place stress on the joint and could result in failure of the joint in use.

Further relevant prior art is known from EP-A-1 647 754, US-A-3 656 784 and US-A-2 287 889.

Pipe joints can form either a closed box system or an open box system. A closed box system is where the inlet and outlet pipes are fixed to rigid mountings to prevent movement of the pipes in a linear direction (i.e. in a direction parallel to the longitudinal axis of the pipes). A conventional flared pipe joint typically works well for this type of system. An open box system is where the inlet and outlet pipes are not fixed. A potential problem with an open box system is that the two joined pipes can separate in use, resulting in failure of the joint. The problem of pipe separation and joint failure can arise under certain operating conditions, such as for example during prolonged high internal pressure and/or high vibration; as a result of a higher than normal internal pressure or burst of pressure; as a result of an incorrectly assembled or manufactured joint; as a result of two slip joints being arranged in a parallel arrangement, such as either side of a U-section assembly, such that the two joints are able to work together to walk/creep apart with prolonged usage under normal operating conditions, and/or the like.

It is therefore an aim of the present invention to provide improved slip joint apparatus that overcomes the abovementioned problems.

It is a further aim of the present invention to provide a method of using improved slip joint apparatus.

According to a first aspect of the present invention there is provided slip joint apparatus as defined in independent claim 1. Preferred embodiments are defined in the dependent claims.

According to a second aspect of the present invention there is provided a method of using slip joint apparatus, as defined in independent claim 15.

Thus, the present invention provides a slip joint with a containment feature to limit the amount of linear slip of the joint in use.

Embodiments of the present invention will now be described with reference to the following figures, wherein:
Figures 1a and 1b (PRIOR ART) show a partial cross sectional view and a perspective view of a conventional slip joint respectively;
Figure 2a and 2b show a perspective view and a partial cross sectional view of slip joint apparatus according to an embodiment of the present invention respectively;
Figures 3a-3c show partial cross sectional views of the slip joint in figures 2a and 2b in a central position, forwards position and backwards position respectively;
Figure 4a shows a cross sectional view of a slip joint assembly according to one embodiment of the present invention, and Figure 4b shows a cross sectional view of a slip joint assembly according to a further embodiment of the present invention.

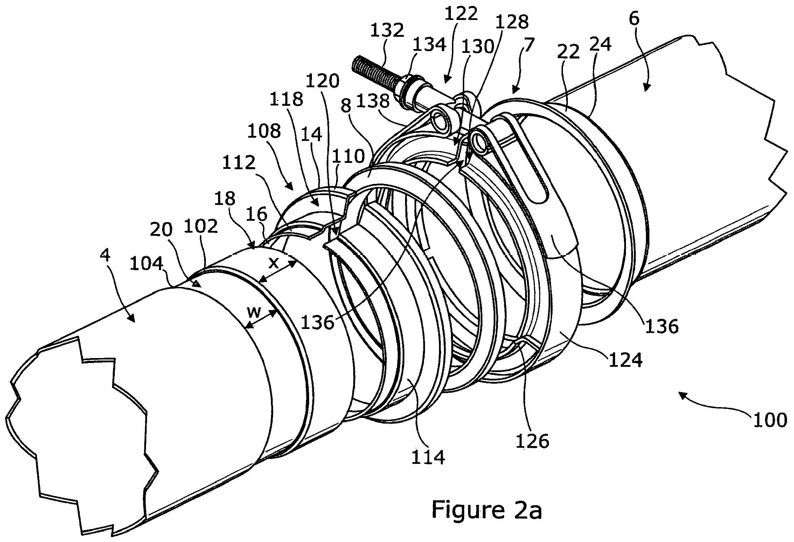

Referring firstly to figures 2a-4a, there is illustrated a slip joint assembly 100 according to a first embodiment of the present invention for use in a vehicle exhaust system. The same reference numerals are used to describe the same features as shown in figures 1a-1b.

The slip joint assembly 100 includes a cylindrical inlet pipe 4 and a cylindrical outlet pipe 6. Both pipes 4, 6 are hollow and are arranged to allow the flow of fluid, such as vehicle exhaust gases, along the same when joined in use.

Inlet pipe 4 has a first free end 18. Movement limitation means in the form of a recess 20 is defined around pipe 4 a pre-determined distance 'x' set back from first end 18. The distance 'x' is such so as to be sufficient to allow sealing means in the form of a gasket 8 to be located on the same in use, and to provide sufficient overlap between the inlet pipe 4 when located in the outlet pipe 6 in use.

Recess 20 as a width 'w' defined between a front side wall 102 (recess side wall closest to the first free end 18) and a rear side wall 104 (recess side wall furthest from the first free end 18). Recess 20 also has a depth 'd' defined between a base surface 106 of the recess 20 and a top edge of the side walls 102, 104.

Outlet pipe 6 has an outwardly flared free end 7. A joining section 22 is defined between oudet pipe 6 and flared free end 7. Joining section 22 has a larger diameter or dimensions compared to the diameter or dimensions of outlet pipe 6 but a smaller diameter or dimensions compared to the diameter or dimensions of the flared free end 7. A first step 24 is defined between the outlet pipe 6 and the joining section 22.

An intermediate joining element or slip flare 108 is provided for engagement with the first pipe 4 in use. The slip flare 108 is annular in shape and has a first skirt section 110 defining a first end 14 and a second skirt section 112 defining a second end 16. First end 14 and first skirt section 110 have a larger diameter than second skirt section 112 and second end 16. In accordance with the present invention an intermediate section 114 is defined between the first and second skirt sections 110, 112. Intermediate section 114 has a larger diameter than second skirt section 112 and a smaller diameter than first skirt section 110.

A second step or wall 116 is defined between the second skirt section 112 and the intermediate section 114. A first step or wall 118 is defined between the intermediate section 114 and the first skirt section 110.

The first skirt section 110, the second skirt section 112 and the intermediate section 114 are flat or planar in cross section.

The second skirt section 112 is typically of such width so as to allow the same to undergo limited sliding movement within recess 20 in a forwards and/or rearwardly linear manner in a direction parallel to the longitudinal axis of the pipes 4, 6.

The second step or wall 116 is the same or similar dimensions to the depth 'd' of side walls 102, 104 of recess 20 on first pipe 4. The second step or wall 116 prevents the second skirt section 112 from lifting out of recess 20 in use.

The first step or wall 118 is the same or similar dimensions to the height or depth of gasket 8.

A split or gap 120 is defined through the slip flare 108 between the first end 14 and second end 16 to allow for expansion and contraction of the slip flare 108. In particular, the gap 120 allows the diameter of the slip flare 108 to increase or decrease depending on whether the slip flare is placed under relative tension or compression respectively during the fitting process. This allows the slip flare 108 to be located over the larger diameter free end 18 of inlet pipe 4 and for the second skirt section 112 to sit in the smaller diameter recess 20 when assembled.

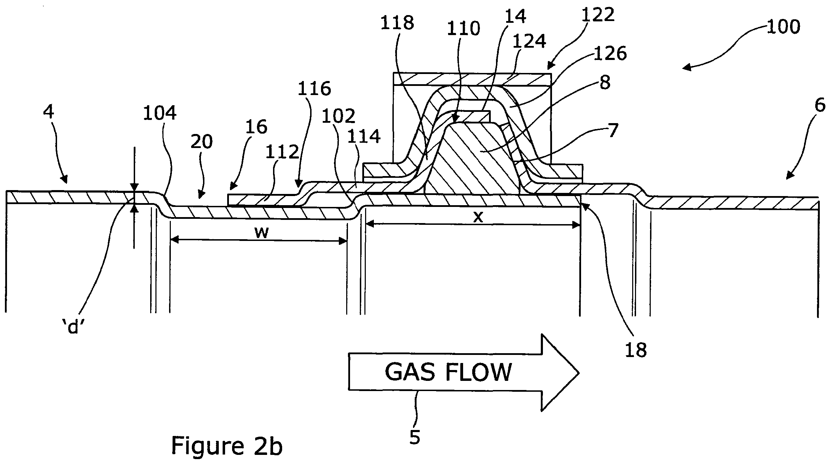

In order to assemble the slip joint 100, slip flare 108 is engaged with inlet pipe 4 by moving second end 16 of slip flare 108 over the first end 18 of inlet pipe 4 until second skirt section 112 locates in recess 20 on inlet pipe 4. Sealing gasket 8 is located over first end 18 of inlet pipe 4 onto width 'x' section so as to abut with the underside surface of the first step 118 and to sit under the first skirt section 110 of the slip flare 108. The flared end 7 of outlet pipe 6 is moved into engagement with the gasket 8 such that at least part of the width 'x' of inlet pipe 4 is located inside outlet pipe 6 in overlapping engagement, as shown in figure 2b, and the flared end abuts side wall of gasket 8. A retaining clamp 122 is then located around the inlet pipe 4, the outlet pipe 6, the slip flare 108 and the gasket 8 to retain the components together in a clamped manner.

The retaining clamp 122 in this example is in the form of a band clamp including an outer annular clamping member 124 and an inner segmented annular clamping member 126. The outer and inner clamping members 124, 126 have two opposing free ends 128, 130. Movement means in the form of a threaded bolt 132 and nut 134 are provided between the two free ends 128 130 (via joining straps 136) to allow the free ends to be moved together to form a clamped position and moved apart to form an unclamped position in use. A gap 138 is defined between the two free ends 128, 130.

The gap 138 of the retaining clamp 122 is typically at least partially or wholly aligned or overlapping with the split 120 of the slip flare 108, thereby allowing the slip flare to be compressed under the clamping force of the retaining clamp in use.

With the slip joint 100 assembled, the second skirt section 112 is able to move within recess 20 but the side walls 102, 104 of the recess 20 limit movement of the second skirt section as a result of second step 116 abutting against either side wall 102, 104. Thus, the slip flare 108 is capable of undergoing forwardly and/or rearwardly sliding movement in a linear direction, typically parallel to the longitudinal axis of the pipes 4, 6, in a restricted or contained manner. This feature ensures that in the event of any of the conditions that may have conventionally resulted in failure of the joint as set out above, the inlet and outlet pipes 4, 6 can only separate by a pre-determined amount equal to the degree of movement of second skirt 112 within width 'w' of the recess 20, and the joint remains intact.

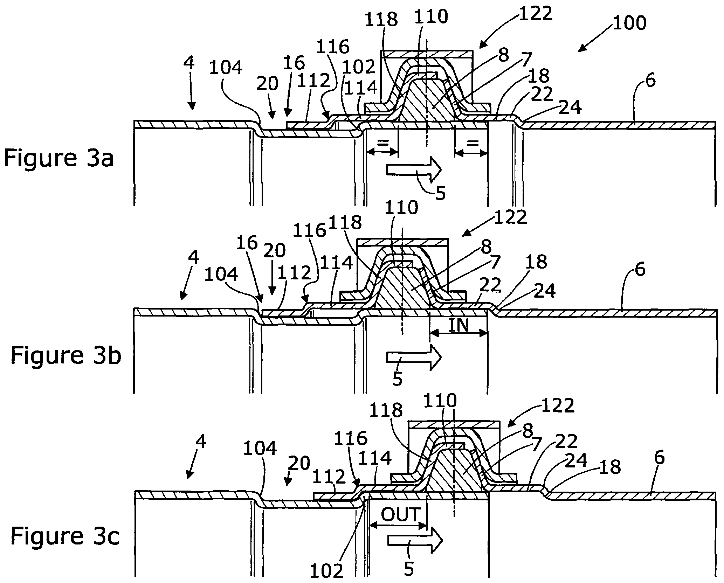

Figure 3a shows the slip joint 100 in a nominal central position, wherein inlet and outlet pipes 4, 6 have freedom of movement in a forwardly direction (i.e. in the direction of the media flow through the pipe or towards second pipe) and/or a rearwardly direction (i.e. in the direction against the media flow through the pipe or towards the first pipe). In this position, the second skirt section 112 is located centrally of the recess 20, there is a relatively small space between the second step 116 and the front side wall 102, gasket 8 is located centrally of the width 'x' adjacent the first free end 18 of pipe 4, and first free end 18 of inlet pipe 4 is a spaced distance apart from first step 24 on outlet pipe 6.

Figure 3b shows the slip joint 100 in a forwardly position (i.e. when the inlet and outlet pipes 4, 6 are as close together as they can be when assembled). In this position, the second end 16 of the second skirt section 112 abuts against rear side wall 104 of recess 20, there is a relatively large space between the second step 116 and the front side wall 102, gasket 8 is located adjacent or close to front side wall 102 and a relatively large distance from free end 18 of inlet pipe 4, and free end 18 of inlet pipe abuts against first step 24 of outlet pipe 6. Thus, there is greater overlap between the inlet and outlet pipes 4, 6 in this position, and step 24 on outlet pipe 6 prevents further forwardly movement of inlet pipe 4 relative to outlet pipe 6, together with rear side wall 104 of recess 20.

Figure 3c shows the slip joint 100 in a rearwardly position (i.e. when the inlet and outlet pipes 4, 6 are as far apart as they can be when assembled). In this position, the second step 116 of the second skirt section 112 abuts against front side wall 102 of recess 20, gasket 8 is located adjacent or close to free end 18 of inlet pipe 4 and a relatively large distance from side wall 102 of recess 20, and free end 18 of inlet pipe 4 is a spaced distance apart from first step 24 of outlet pipe 6. Thus, there is the least overlap between the inlet and outlet pipes 4, 6 in this position, and side wall 102 of recess 20 prevents further rearwardly movement (i.e. separation of the pipes 4, 6).

The slip flare 18 is able to slidably move between the three different positions shown above in use but further movement beyond the forwardly and rearwardly limits is prevented.

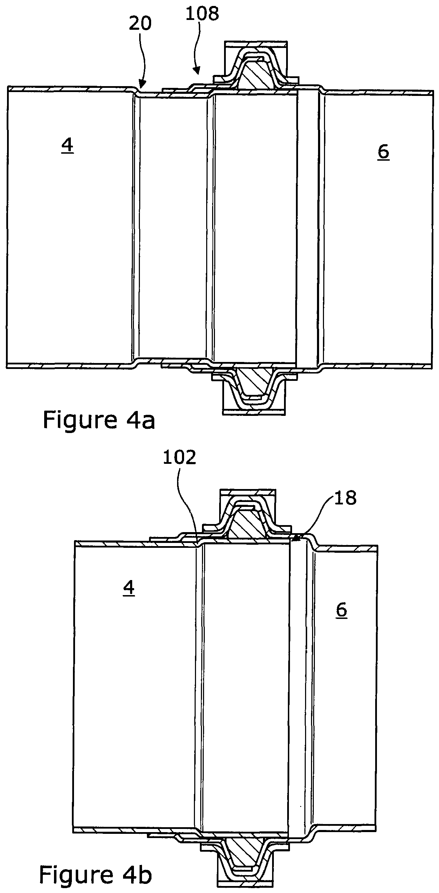

Although the above embodiment describes the movement limitation means on the inlet pipe as being in the form of a recess or internally flared as shown in figures 2a-4a, it will be appreciated that the movement limitation means on the inlet pipe could be in the form of a protrusion or be externally flared instead, as shown in figure 4b. This latter arrangement results in improved fluid flow within the pipe since there is nothing protruding into the hollow pipe interior as there is with the recess embodiment shown in figures 2a-4a. In the externally flared arrangement, the section of the pipe adjacent first end 18 has greater dimensions or diameter compared to the dimensions or diameter of the pipe behind step 102. The width of the flared section is equivalent to the width 'x' as with the first embodiment. There is no rear wall 104 to help limit forwards movement of the pipes 4, 6 as there is with the first embodiment but the step 22 on the second pipe 6 still acts to limit forwards movement of the pipes 4, 6. In this embodiment, it is also possible that the gap 120 in the slip flare is not required if the slip flare can be loaded onto the inlet pipe from an end other than the first end 18.

## Claims

1. Slip joint apparatus, said slip joint apparatus including a first component (4) having a first end (18) and a second component (6) having a second end (7), the second end of the second component arranged such that it can be brought into overlapping engagement with the first end of the first component in use, and an intermediate joining element (108) for helping to join the first and second components together in use, and wherein movement limitation means (20) are provided on or associated with, at or adjacent the first end of the first component (4) for limiting movement of at least part of the intermediate joining element (108) in at least one direction relative to said first component in use, **characterised in that** the intermediate joining element (108) has a first skirt or platform (110) provided at or adjacent a first end (14), and a second skirt or platform (112) provided at or adjacent a second end (16), and an intermediate section (114) provided between the first end, skirt or platform and the second end, skirt or platform, the intermediate section having larger dimensions and/or diameter compared to the second end, skirt or platform, and smaller dimensions and/or diameter compared to the first end, skirt or platform, and wherein the second end, skirt or platform of the intermediate joining element is engageable with or locatable in the movement limitation means (20) provided on the first component (4) in use.

2. Slip joint apparatus according to claim 1 wherein the first and/or second components (4,6) have a longitudinal axis or axes and limitation of movement in the at least first direction is in a direction parallel or substantially parallel to the longitudinal axis or axes of the first and/or second components.

3. Slip joint apparatus according to claim 1 wherein the second end (7) of the second component (6) is flared and/or is outwardly flared, at least one skirt or platform section (22) is provided between the flared second end and a remaining section of the second component, and wherein dimensions and/or a diameter of the at least one skirt or platform section is larger than the dimensions and/or diameter of the remaining section of the second component but smaller than the dimensions and/or diameter of the flared second end, thereby forming a step (24) between the at least skirt or platform section and the remaining section of the second component to act as a limit to which the first end (18) of the first component (4) can be inserted through an open end of the second component (6) in use.

4. Slip joint apparatus according to claim 1 wherein a first step (118) is provided between the first end, skirt or platform and the intermediate so section (114) of the intermediate joining element (108), and at least a second step (116) is provided between the intermediate section and the second end, skirt or platform (112) of the intermediate joining element (108), and wherein a height or depth of the second step (116) is equal to, substantially equal to, greater than or slightly greater than a height or depth of the movement limitation means (20) defined in or associated with the first component (4) md/or the thickness of the material used to form the intermediate joining element.

5. Slip joint apparatus according to claim 4 wherein a height or depth of the first step (118) of the intermediate joining element (108) is equal to, substantially equal to, greater than or slightly greater than a height of depth of sealing means (8) that are locatable at least partially under or relative to the first step in use.

6. Slip joint apparatus according to claim 1 wherein a width of the second skirt or platform (112) of the intermediate joining element (108) is such so as to be locatable in the movement limitation means (20) and movable therein or relative thereto in use and/or is of sufficient stiffness to prevent, or substantially prevent, lifting of the same over part or out of the movement limitation means in use.

7. Slip joint apparatus according to claim 1 wherein a width of the first skirt or platform (110) of the intermediate joining element (108) is such so as to be wholly or at least partially overlapping with at least a top surface of sealing means (8) in use.

8. Slip joint apparatus according to claim 1 wherein the intermediate joining element (108) has a split or gap (120) provided between first and second ends of the same.

9. Slip joint apparatus according to claim 1 wherein the movement limitation means are in the form of a recess (20), an inwardly flared section defined in the first component a spaced distance or set back from a first free end of the component, or in the form of a protrusion or outwardly flared section defined in the first component a spaced distance apart or set back from the first free end of the first component, or at the first free end of the component.

10. Slip joint apparatus according to claim 9 wherein a height of a first step or side wall of the recess (20), inwardly flared section, protrusion or outwardly flared section is equal to, substantially equal to or smaller than a height of a second step (116) of the intermediate joining element.

11. Slip joint apparatus according to claim 9 wherein the recess (20) has a first step or side wall (120) and a second step or side wall (104) and the width of the recess between the same is such so as to allow the second end, skirt or platform of the intermediate joining element to be slidably movable therein in use.

12. Slip joint apparatus according to claim 1 wherein sealing means (8) are provided to form a seal between at least the first and second components (4, 6) when joined together.

13. Slip joint apparatus according to claim 1 wherein clamping means (112) are provided for clamping the first component, second component, the intermediate joining element and/or sealing means together in use; the clamping means are movable between a first clamped position, wherein the component being clamped are prevented or substantially prevented from moving under normal conditions, and a second unclamped position, wherein the components being clamped can be assembled and/or disassembled and/or moved relative to the clamping means.

14. Slip joint apparatus according to claim 13 wherein the clamping means (112) has two opposing free ends and a gap is provided between the two opposing free ends at least in the unclamped position, said gap is arranged to be at least partially or wholly aligned or overlapping with a split or gap provided in the intermediate joining element when the apparatus is assembled in use.

15. A method of using slip joint apparatus, said slip joint apparatus including a first component (4) having a first end (18) and a second component (6) having a second end (7), and an intermediate joining element (108), said method including the steps of bringing the second end of the second component into overlapping engagement with the first end of the first component in use, applying the intermediate joining element to the first and/or second components to help to join the first and second components together in use, and wherein movement limitation means (20) are provided on or associated with, at or adjacent the first end of the first component for limiting movement of at least part of the intermediate joining element in at least one direction relative to said first component in use, **characterised in that** the intermediate joining element has a first skirt or platform (110) provided at or adjacent a first end, and a second skirt or platform (112) provided at or adjacent a second end, and an intermediate section (114) provided between the first end, skirt or platform and the second end, skirt or platform, the intermediate section (114) having larger dimensions and/or diameter compared to the second end, skirt or platform, and smaller dimensions and/or diameter compared to the first end, skirt or platform, and wherein the method step includes the step of engaging or locating the second end, skirt or platform of the intermediate joining element (108) in the movement limitation means (20) provided on the first component (4) in use.

## Patentansprüche

1. Gleitverbindungsvorrichtung, wobei die genannte Gleitverbindungsvorrichtung ein erstes Bauteil (4) mit einem ersten Ende (18) und ein zweites Bauteil (6) mit einem zweiten Ende (7), wobei das zweite Ende des zweiten Bauteils so angeordnet ist, dass es im Gebrauch in überlappenden Eingriff mit dem ersten Ende des ersten Bauteils gebracht werden kann, und ein Verbindungszwischenstück (108), um im Gebrauch beim Verbinden des ersten und des zweiten Bauteils miteinander behilflich zu sein, beinhaltet und wobei ein Bewegungsbeschränkungsmittel (20) im Gebrauch an oder neben dem ersten Ende des ersten Bauteils (4) zum Beschränken der Bewegung von wenigstens einem Teil des Verbindungszwischenstücks (108) in wenigstens einer Richtung relativ zu dem genannten ersten Bauteil bereitgestellt oder ihm zugeordnet ist, **dadurch gekennzeichnet, dass** das Verbindungszwischenstück (108) eine(n) erste(n) Rand oder Plattform (110), der bzw. die an oder neben einem ersten Ende (14) bereitgestellt ist, und eine(n) zweite(n) Rand oder Plattform (112), der bzw. die an oder neben einem zweiten Ende (16) bereitgestellt ist, und einen Zwischenabschnitt (114), der zwischen dem bzw. der ersten Ende, Rand oder Plattform und dem bzw. der zweiten Ende, Rand oder Plattform bereitgestellt ist, hat, wobei der Zwischenabschnitt verglichen mit dem bzw. der zweiten Ende, Rand oder Plattform (einen) größere(n) Abmessungen und/oder Durchmesser hat und verglichen mit dem bzw. der ersten Ende, Rand oder Plattform (einen) kleinere(n) Abmessungen und/oder Durchmesser hat und wobei der bzw. die zweite Ende, Rand oder Plattform des Verbindungszwischenstücks im Gebrauch mit dem bzw. in dem Bewegungsbeschränkungsmittel (20), das an dem ersten Bauteil (4) bereitgestellt ist, in Eingriff gebracht oder eingerastet werden kann.

2. Gleitverbindungsvorrichtung nach Anspruch 1, wobei das erste und/oder das zweite Bauteil (4, 6) (eine) Längsachse oder -achsen haben und die Bewegungsbeschränkung in wenigstens der ersten Richtung in einer Richtung ist, die zu der bzw. den Längsachse oder -achsen des ersten und/oder zweiten Bauteils parallel oder im Wesentlichen parallel ist.

3. Gleitverbindungsvorrichtung nach Anspruch 1, wobei das zweite Ende (7) des zweiten Bauteils (6) aufgeweitet und/oder nach außen aufgeweitet ist, zwischen dem aufgeweiteten zweiten Ende und einem übrigen Abschnitt des zweiten Bauteils wenigstens ein Rand- oder Plattformabschnitt bereitgestellt ist und wobei Abmessungen und/oder ein Durchmesser des wenigstens einen Rand- oder Plattformabschnitts größer als die Abmessungen und/oder der Durchmesser des übrigen Abschnitts des zweiten Bauteils ist, aber kleiner als die Abmessungen und/oder der Durchmesser des aufgeweiteten zweiten Endes, wodurch zwischen dem wenigstens Rand- oder Plattformabschnitt und dem übrigen Abschnitt des zweiten Bauteils eine Stufe (24) gebildet wird, um als eine Begrenzung zu wirken, bis zu der das erste Ende (18) des ersten Bauteils (4) im Gebrauch durch ein offenes Ende des zweiten Bauteils (6) eingeführt werden kann.

4. Gleitverbindungsvorrichtung nach Anspruch 1, wobei zwischen dem bzw. der ersten Ende, Rand oder Plattform und dem Zwischenabschnitt (114) des Verbindungszwischenstücks (108) eine erste Stufe (118) bereitgestellt ist und zwischen dem Zwischenabschnitt und dem bzw. der zweiten Ende, Rand oder Plattform (112) des Verbindungszwischenstücks (108) wenigstens eine zweite Stufe (116) bereitgestellt ist und wobei eine Höhe oder Tiefe der zweiten Stufe (116) so groß wie, im Wesentlichen so groß wie, größer als oder etwas größer als eine Höhe oder Tiefe des Bewegungsbeschränkungsmittels (20), das in dem ersten Bauteil (4) definiert oder ihm zugeordnet ist, und/oder die Dicke des Materials, das zum Bilden des Verbindungszwischenelements verwendet wird, ist.

5. Gleitverbindungsvorrichtung nach Anspruch 4, wobei eine Höhe oder Tiefe der ersten Stufe (118) des Verbindungszwischenstücks (108) so groß wie, im Wesentlichen so groß wie, größer als oder etwas größer als eine Höhe oder Tiefe eines Dichtungsmittels (8) ist, das im Gebrauch wenigstens teilweise unter oder relativ zu der ersten Stufe positionierbar ist.

6. Gleitverbindungsvorrichtung nach Anspruch 1, wobei eine Breite des bzw. der zweiten Rands oder Plattform (112) des Verbindungszwischenstücks (108) so ist, dass er bzw. sie im Gebrauch in das Bewegungsbeschränkungsmittel (20) einrastbar ist und darin oder relativ dazu bewegbar ist, und/oder eine ausreichende Steifigkeit hat, um das Heben desselben im Gebrauch über einen Teil oder aus dem Bewegungsbeschränkungsmittel heraus zu verhüten oder im Wesentlichen zu verhüten.

7. Gleitverbindungsvorrichtung nach Anspruch 1, wobei eine Breite des bzw. der ersten Rands oder Plattform (110) des Verbindungszwischenstücks (108) so ist, dass er bzw. sie im Gebrauch wenigstens eine Oberseite des Dichtungsmittels (8) ganz oder wenigstens teilweise überlappt.

8. Gleitverbindungsvorrichtung nach Anspruch 1, wobei das Verbindungszwischenstück (108) eine Lücke oder einen Spalt (120) hat, die bzw. der zwischen dem ersten und dem zweiten Ende desselben bereitgestellt ist.

9. Gleitverbindungsvorrichtung nach Anspruch 1, wobei das Bewegungsbeschränkungsmittel die Form einer Aussparung (20), eines einwärts aufgeweiteten Abschnitts, der in dem ersten Bauteil in einer beabstandeten Entfernung oder zurückversetzt von einem ersten freien Ende des Bauteils definiert ist, oder die Form eines Vorsprungs oder nach außen aufgeweiteten Abschnitts, der in dem ersten Bauteil in einer beabstandeten Entfernung oder zurückversetzt von dem ersten freien Ende des ersten Bauteils oder an dem ersten freien Ende des Bauteils definiert ist, hat.

10. Gleitverbindungsvorrichtung nach Anspruch 9, wobei eine Höhe einer ersten Stufe oder Seitenwand der Aussparung (20), des einwärts aufgeweiteten Abschnitts, des Vorsprungs oder des nach außen aufgeweiteten Abschnitts so groß wie, im Wesentlichen so groß wie oder kleiner als eine Höhe einer zweiten Stufe (116) des Verbindungszwischenstücks ist.

11. Gleitverbindungsvorrichtung nach Anspruch 9, wobei die Aussparung (20) eine erste Stufe oder Seitenwand (120) und eine zweite Stufe oder Seitenwand (104) hat und die Breite der Aussparung zwischen denselben so ist, dass sie zulässt, dass das bzw. die zweite Ende, Rand oder Plattform des Verbindungszwischenstücks im Gebrauch darin gleitbewegbar ist.

12. Gleitverbindungsvorrichtung nach Anspruch 1, wobei ein Dichtungsmittel (8) bereitgestellt ist, um eine Dichtung zwischen wenigstens dem ersten und dem zweiten Bauteil (4, 6) zu bilden, wenn sie aneinandergefügt worden sind.

13. Gleitverbindungsvorrichtung nach Anspruch 1, wobei zum Festklemmen des ersten Bauteils, des zweiten Bauteils, des Verbindungszwischenstücks und/oder des Dichtungsmittels aneinander im Gebrauch ein Klemmungsmittel (112) bereitgestellt ist; wobei das Klemmungsmittel zwischen einer ersten Klemmstellung, in der verhütet oder im Wesentlichen verhütet wird, dass das festgeklemmte Bauteil sich unter normalen Bedingungen bewegt, und einer zweiten, nicht festgeklemmten Stellung, in der die festgeklemmten Bauteile zusammengebaut und/oder auseinandergebaut und/oder relativ zu dem Klemmungsmittel bewegt werden können, bewegbar ist.

14. Gleitverbindungsvorrichtung nach Anspruch 13, wobei das Klemmungsmittel (112) zwei einander gegenüberliegende freie Enden hat und zwischen den zwei einander gegenüberliegenden freien Enden wenigstens in der nicht festgeklemmten Stellung ein Spalt bereitgestellt ist, wobei der genannte Spalt so angeordnet ist, dass er wenigstens teilweise oder ganz (auf) eine Lücke oder einen Spalt ausgerichtet ist oder überlappt, die bzw. der in dem Verbindungszwischenstück bereitgestellt ist, wenn die Vorrichtung im Gebrauch zusammengebaut wird.

15. Verfahren zur Verwendung einer Gleitverbindungsvorrichtung, wobei die genannte Gleitverbindungsvorrichtung ein erstes Bauteil (4) mit einem ersten Ende (18) und ein zweites Bauteil (6) mit einem zweiten Ende (7) und ein Verbindungszwischenstück (108) beinhaltet, wobei das genannte Verfahren die folgenden Schritte beinhaltet: Bringen des zweiten Endes des zweiten Bauteils im Gebrauch in überlappenden Eingriff mit dem ersten Ende des ersten Bauteils, Aufbringen des Verbindungszwischenstücks auf das erste und/oder zweite Bauteil, um im Gebrauch beim Verbinden des ersten und des zweiten Bauteils miteinander behilflich zu sein, und wobei ein Bewegungsbeschränkungsmittel (20) im Gebrauch an oder neben dem ersten Ende des ersten Bauteils zum Beschränken der Bewegung von wenigstens einem Teil des Verbindungszwischenstücks in wenigstens einer Richtung relativ zu dem genannten ersten Bauteil bereitgestellt oder ihm zugeordnet ist, **dadurch gekennzeichnet, dass** das Verbindungszwischenstück eine(n) erste(n) Rand oder Plattform (110), der bzw. die an oder neben einem ersten Ende bereitgestellt ist, und eine(n) zweite(n) Rand oder Plattform (112), der bzw. die an oder neben einem zweiten Ende bereitgestellt ist, und einen Zwischenabschnitt (114), der zwischen dem bzw. der ersten Ende, Rand oder Plattform und dem bzw. der zweiten Ende, Rand oder Plattform bereitgestellt ist, hat, wobei der Zwischenabschnitt verglichen mit dem bzw. der zweiten Ende, Rand oder Plattform (einen) größere(n) Abmessungen und/oder Durchmesser hat und verglichen mit dem bzw. der ersten Ende, Rand oder Plattform (einen) kleinere(n) Abmessungen und/oder Durchmesser hat und wobei der Verfahrensschritt den Schritt des Ineingriffbringens oder Einrastens des bzw. der zweiten Endes, Rands oder Plattform des Verbindungszwischenstücks (108) im Gebrauch mit dem bzw. in dem Bewegungsbeschränkungsmittel (20), das an dem ersten Bauteil (4) bereitgestellt ist, beinhaltet.

## Revendications

1. Appareil de joint glissant, ledit appareil de joint glissant incluant un premier composant (4) ayant une première extrémité (18) et un deuxième composant (6) ayant une deuxième extrémité (7), la deuxième extrémité du deuxième composant étant agencée de telle sorte qu'elle puisse être amenée en solidarisation chevauchante avec la première extrémité du premier composant en utilisation, et un élément de jonction intermédiaire (108) pour aider à joindre les premier et deuxième composants ensemble en utilisation, et dans lequel des moyens de limitation de mouvement (20) sont prévus sur ou associés à, au niveau de ou en position adjacente à la première extrémité du premier composant (4) pour limiter le mouvement d'au moins une partie de l'élément de jonction intermédiaire (108) dans au moins un sens relativement audit premier composant en utilisation, **caractérisé en ce que** l'élément de jonction intermédiaire (108) possède une première jupe ou plate-forme (110) prévue au niveau de ou en position adjacente à une première extrémité (14), et une deuxième jupe ou plate-forme (112) prévue au niveau de ou en position adjacente à une deuxième extrémité (16), et une section intermédiaire (114) prévue entre la première extrémité, jupe ou plate-forme et la deuxième extrémité, jupe ou plate-forme, la section intermédiaire ayant des dimensions plus grandes et/ou un diamètre plus grand comparés à la deuxième extrémité, jupe ou plate-forme, et des dimensions plus petites et/ou un diamètre plus petit comparés à la première extrémité, jupe ou plate-forme, et dans lequel la deuxième extrémité, jupe ou plate-forme de l'élément de jonction intermédiaire est apte à être solidarisée avec ou localisée dans les moyens de limitation de mouvement (20) prévus sur le premier composant (4) en utilisation.

2. Appareil de joint glissant selon la revendication 1 dans lequel les premier et/ou deuxième composants (4, 6) ont un axe longitudinal ou des axes longitudinaux et une limitation de mouvement dans l'au moins premier sens qui est dans un sens parallèle ou substantiellement parallèle à l'axe longitudinal ou aux axes longitudinaux des premier et/ou deuxième composants.

3. Appareil de joint glissant selon la revendication 1 dans lequel la deuxième extrémité (7) du deuxième composant (6) est évasée et/ou est évasée vers l'extérieur, au moins une section jupe ou plate-forme (22) est prévue entre la deuxième extrémité évasée et une section restante du deuxième composant, et dans lequel des dimensions et/ou un diamètre de l'au moins une section jupe ou plate-forme sont plus grands que les dimensions et/ou le diamètre de la section restante du deuxième composant mais plus petits que les dimensions et/ou le diamètre de la deuxième extrémité évasée, formant ainsi un gradin (24) entre l'au moins section jupe ou plate-forme et la section restante du deuxième composant afin d'agir en tant que limite sur laquelle la première extrémité (18) du premier composant (4) peut être insérée à travers une extrémité ouverte du deuxième composant (6) en utilisation.

4. Appareil de joint glissant selon la revendication 1 dans lequel un premier gradin (118) est prévu entre la première extrémité, jupe ou plate-forme et la section intermédiaire (114) de l'élément de jonction intermédiaire (108), et au moins un deuxième gradin (116) est prévu entre la section intermédiaire et la deuxième extrémité, jupe ou plate-forme (112) de l'élément de jonction intermédiaire (108), et dans lequel une hauteur ou profondeur du deuxième gradin (116) est égale à, substantiellement égale à, plus grande que ou légèrement plus grande qu'une hauteur ou profondeur des moyens de limitation de mouvement (20) définis dans ou associés au premier composant (4) et/ou l'épaisseur du matériau utilisé pour former l'élément de jonction intermédiaire.

5. Appareil de joint glissant selon la revendication 4 dans lequel une hauteur ou profondeur du premier gradin (118) de l'élément de jonction intermédiaire (108) est égale à, substantiellement égale à, plus grande que ou légèrement plus grande qu'une hauteur ou profondeur de moyens d'étanchéité (8) qui sont aptes à être localisés au moins partiellement sous ou relativement au premier gradin en utilisation.

6. Appareil de joint glissant selon la revendication 1 dans lequel une largeur de la deuxième jupe ou plate-forme (112) de l'élément de jonction intermédiaire (108) est telle pour qu'elle puisse être localisée dans les moyens de limitation de mouvement (20) et apte à être déplacée dans ceux-ci ou relativement à ceux-ci en utilisation et/ou possède une rigidité suffisante pour empêcher, ou empêcher substantiellement, un levage de celle-ci par-dessus une partie ou hors des moyens de limitation de mouvement en utilisation.

7. Appareil de joint glissant selon la revendication 1 dans lequel une largeur de la première jupe ou plate-forme (110) de l'élément de jonction intermédiaire (108) est telle pour qu'elle soit en chevauchement entièrement ou au moins partiellement avec au moins une surface supérieure des moyens d'étanchéité (8) en utilisation.

8. Appareil de joint glissant selon la revendication 1 dans lequel l'élément de jonction intermédiaire (108) a un écart ou intervalle (120) prévu entre des première et deuxième extrémités de celui-ci.

9. Appareil de joint glissant selon la revendication 1 dans lequel les moyens de limitation de mouvement se présentent sous la forme d'un évidement (20), d'une section évasée vers l'intérieur définie dans le premier composant à une distance d'espacement ou située en arrière par rapport à une première extrémité libre du composant, ou sous la forme d'une saillie ou d'une section évasée vers l'extérieur définie dans le premier composant à une distance d'espacement ou située en arrière par rapport à la première extrémité libre du premier composant, ou au niveau de la première extrémité libre du composant.

10. Appareil de joint glissant selon la revendication 9 dans lequel une hauteur d'un premier gradin ou d'une première paroi latérale de l'évidement (20), d'une section évasée vers l'intérieur, d'une saillie ou section évasée vers l'extérieur est égale à, substantiellement égale à ou plus petite qu'une hauteur d'un deuxième gradin (116) de l'élément de jonction intermédiaire.

11. Appareil de joint glissant selon la revendication 9 dans lequel l'évidement (20) possède un premier gradin ou une première paroi latérale (120) et un deuxième gradin ou une deuxième paroi latérale (104) et la largeur de l'évidement entre ceux-ci est telle qu'elle permet à la deuxième extrémité, jupe ou plate-forme de l'élément de jonction intermédiaire de pouvoir se déplacer de manière glissante dans ceux-ci en utilisation.

12. Appareil de joint glissant selon la revendication 1 dans lequel des moyens d'étanchéité (8) sont prévus pour former un joint entre au moins les premier et deuxième composants (4, 6) lorsqu'ils sont joints ensemble.

13. Appareil de joint glissant selon la revendication 1 dans lequel des moyens de serrage (112) sont prévus pour serrer ensemble le premier composant, le deuxième composant, l'élément de jonction intermédiaire et/ou les moyens d'étanchéité en utilisation ; les moyens de serrage pouvant être déplacés entre une première position serrée, dans laquelle les composants en cours de serrage sont empêchés ou sont empêchés substantiellement de se déplacer sous des conditions normales, et une deuxième position desserrée, dans laquelle les composants en cours de serrage peuvent être assemblés et/ou désassemblés et/ou déplacés relativement aux moyens de serrage.

14. Appareil de joint glissant selon la revendication 13 dans lequel les moyens de serrage (112) ont deux extrémités libres opposées et un intervalle est prévu entre les deux extrémités libres opposées au moins dans la position desserrée, ledit intervalle étant agencé de façon à être en alignement ou en chevauchement au moins partiel ou total avec un écart ou intervalle prévu dans l'élément de jonction intermédiaire lorsque l'appareil est assemblé en utilisation.

15. Procédé d'utilisation d'un appareil de joint glissant, ledit appareil de joint glissant incluant un premier composant (4) ayant une première extrémité (18) et un deuxième composant (6) ayant une deuxième extrémité (7), et un élément de jonction intermédiaire (108), ledit procédé incluant les étapes consistant à amener la deuxième extrémité du deuxième composant en solidarisation chevauchante avec la première extrémité du premier composant en utilisation, l'application de l'élément de jonction intermédiaire aux premier et/ou deuxième composants pour aider à joindre les premier et deuxième composants ensemble en utilisation, et dans lequel des moyens de limitation de mouvement (20) sont prévus sur ou associés à, au niveau de ou en position adjacente à la première extrémité du premier composant pour limiter le mouvement d'au moins une partie de l'élément de jonction intermédiaire dans au moins un sens relativement audit premier composant en utilisation, **caractérisé en ce que** l'élément de jonction intermédiaire possède une première jupe ou plate-forme (110) prévue au niveau de ou en position adjacente à une première extrémité, et une deuxième jupe ou plate-forme (112) prévue au niveau de ou en position adjacente à une deuxième extrémité, et une section intermédiaire (114) prévue entre la première extrémité, jupe ou plate-forme et la deuxième extrémité, jupe ou plate-forme, la section intermédiaire (114) ayant des dimensions plus grandes et/ou un diamètre plus grand comparés à la deuxième extrémité, jupe ou plate-forme, et des dimensions plus petites et/ou un diamètre plus petit comparés à la première extrémité, jupe ou plate-forme, et le procédé incluant l'étape consistant à solidariser ou localiser la deuxième extrémité, jupe ou plate-forme de l'élément de jonction intermédiaire (108) dans les moyens de limitation de mouvement (20) prévus sur le premier composant (4) en utilisation.
